(19) Europäisches Patentamt
European Patent Office
Office européen des brevets

(11) **EP 3 225 986 A1**

(12) **EUROPEAN PATENT APPLICATION**

(43) Date of publication:
**04.10.2017 Bulletin 2017/40**

(51) Int Cl.:
**G01N 29/024** (2006.01)  **G01N 29/07** (2006.01)
**G01N 29/44** (2006.01)

(21) Application number: **16305373.9**

(22) Date of filing: **30.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Université de Strasbourg**
**67000 Strasbourg (FR)**
• **Centre National de la Recherche Scientifique**
**75016 Paris (FR)**

(72) Inventors:
• **VAPPOU, Jonathan**
**67100 Strasbourg (FR)**

• **RAUL, Jean-Sébastien**
**67540 Ostwald (FR)**
• **BOURDET, Nicolas**
**67350 Pfaffenhoffen (FR)**
• **WILLINGER, Remy**
**67000 Strasbourg (FR)**
• **BARLES, Damien**
**37000 Tours (FR)**
• **MARTIN-WORTHAM, Julie**
**77700 Coupvray (FR)**
• **SCHUH, Vincent**
**67190 Still (FR)**

(74) Representative: **Pontet Allano & Associes**
**Parc Les Algorithmes, Bâtiment Platon**
**CS 70003 Saint-Aubin**
**91192 Gif-sur-Yvette Cedex (FR)**

(54) **PROCESS AND APPARATUS FOR NONINVASIVE ESTIMATION OF TIME OF DEATH**

(57) The present invention is within the field of forensic medicine and relates to a process and a relative apparatus for noninvasively determining a time of death of a biological organism (9), said process comprising: emitting in succession over time ultrasonic waves (1) from outside (82) the biological organism (9) in such a way that said ultrasonic waves (1) propagate within (81) the biological organism (9); for each emitted ultrasonic wave (1), detecting from outside (82) the biological organism (9) an echo (11) resulting from a reflection and/or a backscattering within (81) the biological organism (9) of said ultrasonic wave (1); determining the time of death of the biological organism (9) by comparing: a temporal variation of an echo time between the emission of one (1) of the ultrasonic waves and the detection of its echo (11), or a temporal variation of a quantity which is representative of said temporal variation of said echo time, with reference data which are representative of standard temporal variation of this echo time or quantity.

Fig. 2

EP 3 225 986 A1

## Description

### Technical field

The present invention is within the field of forensic medicine.

More particularly, the present invention relates to processes and apparatus for noninvasively determining time of death in forensic medicine.

### Background

The determination of time of death in forensic medicine is classically based on relatively subjective inspection of death such as rigor mortis, lividity, decay and cooling. Reliability of such estimation thus depends upon the skill and experience of medical examiner.

Time of death is also estimated via temperature measurement of the cadaver, typically by introducing a thermometer within the rectum.

The document US 2015/0127293 A1 describes a device and a process for determining the time of death of a biological organism by the use of a thermometer probe. In an embodiment of this device or process using an infrared ear canal thermometer, the measured temperature is dramatically biased due to exogenous factors (environmental temperature, air humidity, etc.).

An object of the present invention is to propose a non-invasive process and apparatus for estimation of time of death, which reduces the bias due to exogenous factors.

### Brief description

This objective is achieved with a process for noninvasively determining a time of death of a biological organism, preferably a human organism, comprising:

- emitting in succession over time ultrasonic waves from outside the biological organism in such a way that said ultrasonic waves propagate within the biological organism;
- for each emitted ultrasonic wave, detecting from outside the biological organism an echo resulting from a reflection and/or a backscattering within the biological organism of said ultrasonic wave;
- determining the time of death of the biological organism by comparing:

    o a temporal variation of an echo time between the emission of one of the ultrasonic waves and the detection of its echo, or a temporal variation of a quantity, preferably a temperature, which is representative of said temporal variation of said echo time,
    o with reference data which are representative of standard temporal variation of this echo time or quantity.

The expression "outside the biological organism" refers to the outside environment of the biological organism which may include oral and/or nasal and/or ear cavities.

So-called reflection of ultrasonic wave can generally occur in particular when said ultrasonic wave entering a new medium, for instance when entering a cerebral hemisphere, or when encountering a falx cerebri or a skull bone of said biological organism.

Accordingly, there is provided a measuring process which is objective and non-invasive, and which allows reliable time of death determination.

In one embodiment, ultrasonic wave emission and echo detection may be carried out by a same ultrasonic transducer.

Said ultrasonic waves may be low-frequency waves, preferably with a frequency less than or equal to 1 MHz, preferably less than or equal to 0.7 MHz, preferably from 0.2 to 0.7 MHz, more preferably equal to 0.5 MHz.

Said biological organism preferably comprises a brain and said ultrasonic waves may be emitted in such a way that said ultrasonic waves propagate within said brain.

Preferably, said biological organism may comprise a skull (comprising preferably a cranial temple, and/or a parietal bone, and/or a temporal bone, and/or a frontal bone).

Said ultrasonic waves may be emitted in the direction of an entering area of the skull (preferably in the direction of said cranial temple or parietal bone or temporal bone or frontal bone), so that said ultrasonic waves propagate through the entering area of the skull before reaching the brain inside the skull.

Each emitted ultrasonic wave can be emitted in such a way that the echo of said ultrasonic wave can be received as a result of a backscattering phenomenon in an area of interest of the brain (preferably at the center of the brain), so that each ultrasonic wave propagates through the brain before reaching the area of interest.

In one embodiment, said process may further comprise determining said quantity (i.e. said quantity which is representative of said temporal variation of said echo time) as a function of said echo time temporal variation and of a coefficient $k$.

Said quantity may be a variation of an internal temperature $\Delta T$, preferably of said brain, calculated using a number of local variations $\partial \Delta t$ of echo time between $d0$ and $d1$ at different locations within said biological organism, preferably within said brain, each local variation depending upon a local coefficient $k$, according to the following equation:

$$\Delta T = k * \frac{\partial \Delta t}{t0}$$

where $t0$ is the echo time corresponding to the echo detected at $d0$.

Under such an alternative, there is no need of any structure having good reflective properties because said echo then results from a backscattering (and not necessarily a reflection) of said ultrasonic wave within the biological organism, specifically at different locations within said brain. In addition, the use of local variations (versus "global" variations) can result in a more precise approximation of said variation of internal temperature $\Delta T$.

In one embodiment, said coefficient $k$ may be a function of a constant $\propto$ of thermal expansion of said brain and of a constant $\beta$ which is representative of a temporal variation of wave velocity within said brain according to a temperature of said brain, according to the following equation:

$$k = \frac{1}{2} * \frac{1}{\propto - \beta}.$$

Preferably, said coefficient k may be from 600°C to 1800°C, preferably from 900°C to 1400°C, preferably 1200°C.

The inventors found that such coefficient values provide a good approximation to determine the time of death of a human organism from the above equations.

As an alternative, each emitted ultrasonic wave can be emitted in such a way that the echo resulting from the reflection of said ultrasonic wave is a result of a reflection of this ultrasonic wave by a reflection area of the skull, so that each ultrasonic wave propagates through the brain before reaching the reflection area.

Skull bone is a structure having good reflective properties.

In another embodiment, said biological organism comprises a falx and, for each emitted ultrasonic wave, said ultrasonic waves may be emitted in such a way that said echo results from ultrasonic wave reflection from said falx.

As an alternative, said ultrasonic waves may be emitted in such a way that said echo results from ultrasonic wave reflection from another structure of said biological organism, for instance any other cranial structure of said biological organism.

In an alternative embodiment, said quantity may be a variation of an internal temperature $\Delta T$, preferably of said brain, between two different points $d0$ and $d1$ in time ($d0$ and $d1$ being two successive temporal dates) and is a function of a variation of said echo time $\Delta t$ between $d0$ and $d1$ and of said coefficient $k$ according to the following equation:

$$\Delta T = \gamma * k * \frac{\Delta t}{t0}$$

where y is a corrective factor and $t0$ is the echo time corresponding to the echo detected at $d0$. Under such an alternative embodiment, the corrective factor y should be employed in order to fix the approximation due to the method of calculation which is global (i.e. reflection case), in comparison with the calculation method using local variations $\partial \Delta t$ (i.e. backscattering case). The corrective factor is preferably from 1.00 to 1.20, preferably from 1.05 to 1.15.

In one embodiment, said process may further comprise measuring an external temperature $T\_ext$ outside the biological organism, and said reference data depend upon said external temperature $T\_ext$.

In this latter embodiment, said reference data may preferably comprise temperature data $T$ which are a function of time $t$ in hours and of $T\_ext$ in degree Celsius.

Preferably, said temperature data T may be calculated according to the following equation, also called hereinafter "Henssge empirical formula":

$$T = T\_ext + (37.2 - T\_ext) * (1.135 * e^{-0.127 * t} - 0.135 * e^{-1.0677 * t}).$$

In this equation, said temperature data $T$ is preferably referring to the temperature within said brain according to the Henssge empirical formula, and said time $t$ is referring to the time from the death.

Said process may further comprise selecting the reference data used for the comparing step within a database comprising a plurality of series of reference data.

In one embodiment, the duration between the first and the last emitted ultrasonic waves may be greater than or equal to 10 min, preferably greater than or equal to 20 min.

Such duration values provide reliable time of death determination.

Said echo may include a fundamental frequency of a corresponding ultrasonic wave.

It is to be noted that reflection and/or backscattering of a given ultrasonic wave within the biological organism result in multiple echoes comprising both a fundamental frequency and harmonics of this given ultrasonic wave. However, in a preferred embodiment harmonics are not used, in particular to optimize the signal-to-noise ratio. In other words, harmonics may be detected or not, but only the fundamental frequency is preferably used in the step of determining the time of death, and preferably no harmonics of any of the emitted ultrasonic waves are used in the step of determining the time of death.

Typically, at least one of the steps of the process according to the invention previously described, preferably each of the steps of the process according to the invention previously described is not performed in a purely abstract or purely intellectual manner but involves use of a technical means.

Typically, each of the steps of the process according to the invention previously described can be implemented by at least one computer, one central processing or computing unit, one analogue electronic circuit (preferably dedicated), one digital electronic circuit (preferably dedicated) and/or one microprocessor (preferably dedicated) and/or by software means.

In another aspect the invention provides for an apparatus for noninvasively determining a time of death of a biological organism, preferably a human organism, comprising:

- an emitter arranged to emit in succession over time ultrasonic waves from outside the biological organism;
- a sensor arranged to detect, for each emitted ultrasonic wave, from outside the biological organism an echo resulting from a reflection and/or a backscattering within the biological organism of said ultrasonic wave;
- an electronic mean arranged and/or programmed to determine the time of death of the biological organism by comparing:

  ◦ a temporal variation of an echo time between the emission of one of the ultrasonic waves and the detection of its echo, or a temporal variation of a quantity which is representative of said temporal variation of said echo time,
  ◦ with reference data which are representative of standard temporal variation of this echo time or quantity.

In one embodiment, said emitter and said sensor may comprise a same ultrasonic transducer.

Said emitter may be arranged to emit low-frequency ultrasonic waves, preferably with a frequency less than or equal to 1 MHz, preferably less than or equal to 0.7 MHz, preferably from 0.2 to 0.7 MHz, more preferably equal to 0.5 MHz.

In one embodiment, said electronic mean may be arranged and/or programmed to determine said quantity as a function of said echo time temporal variation and of a coefficient $k$.

Preferably, said quantity may be a variation of an internal temperature $\Delta T$, and said electronic mean may be arranged and/or programmed to calculate said internal temperature $\Delta T$ using a number of local variations $\partial \Delta t$ of echo time between $d0$ and $d1$ at different locations within said biological organism, preferably within said brain, each local variation depending upon a local coefficient $k$, according to the following equation:

$$\Delta T = k * \frac{\partial \Delta t}{t0}$$

where $t0$ is the echo time corresponding to the echo detected at $d0$.

In one embodiment, said coefficient $k$ may be a function of a constant $\propto$ of thermal expansion of a brain and of a constant $\beta$ which is representative of a temporal variation of wave velocity within said brain according to a temperature of said brain, according to the following equation:

$$k = \frac{1}{2} * \frac{1}{\propto - \beta}.$$

Preferably, said coefficient k may be from 600°C to 1800°C, preferably from 900°C to 1400°C, preferably 1200°C.

In an alternative embodiment, said quantity may be a variation of an internal temperature $AT$, preferably of said brain, between two different points $d0$ and $d1$ in time and said electronic mean is arranged and/or programmed to determine said quantity as a function of a variation of said echo time $\varDelta t$ between $d0$ and $d1$ and of said coefficient $k$ according to the following equation:

$$\Delta T = \gamma * k * \frac{\Delta t}{t0}$$

where y is a corrective factor and $t0$ is the echo time corresponding to the echo detected at $d0$. Under such an alternative embodiment, the corrective factor y should be employed in order to fix the approximation due to the method of calculation which is global (i.e. reflection case), in comparison with the calculation method using local variations $\partial \varDelta t$ (i.e. backscattering case). The corrective factor is preferably from 1.00 to 1.20, preferably from 1.05 to 1.15.

In one embodiment, said apparatus may further comprise a thermometer arranged to measure an external temperature $T\_ext$ outside the biological organism and said electronic mean is arranged and/or programmed to determine said reference data according to said external temperature $T\_ext$.

In this latter embodiment, said reference data may preferably comprise temperature data $T$ and said electronic mean may be arranged and/or programmed to calculate said temperature data $T$ according to the following equation:

$$T = T\_ext + (37.2 - T\_ext) * (1.135 * e^{-0.127*t} - 0.135 * e^{-1.0677*t}).$$

Said apparatus may further comprise a database comprising a plurality of series of reference data and said electronic mean may be arranged and/or programmed to select within said database the reference data used for comparing said temporal variation of said echo time or quantity with said reference data.

Said emitter may be arranged to emit ultrasonic waves so as the duration between the first and the last emitted ultrasonic waves is greater than or equal to 10 min, preferably greater than or equal to 20 min.

In one embodiment, said sensor may be arranged to detect said echo which includes a fundamental frequency of a corresponding ultrasonic wave.

Preferably, said electronic mean may be arranged and/or programmed in order to use only the fundamental frequency for determining the time of death, and for not using harmonics of any of the emitted ultrasonic waves for determining the time of death.

Typically, at least one of the means of the apparatus according to the invention previously described, preferably each of the means of the apparatus according to the invention previously described are technical means.

Typically, each of the means of the apparatus according to the invention previously described can comprise at least one computer, one central processing or computing unit, one analogue electronic circuit (preferably dedicated), one digital electronic circuit (preferably dedicated) and/or one microprocessor (preferably dedicated) and/or software means.

**Description of the drawings and embodiments**

Further advantages and features of the invention will appear upon reading the detailed description of implementations and embodiments in no way limiting, and the following appended drawings wherein:

- FIG. 1 is a schematic representation of the basic elements of the apparatus of the present invention and of a human organism;
- FIG. 2 is a schematic representation of said basic elements of FIG. 1 and of a brain of said human organism subjected to a reflected echo method;
- FIG. 3 is a schematic representation of said basic elements of FIG. 1 and of a brain of said human organism subjected to a backscattered echo method;
- FIG. 4 illustrates graphically a processing stage for estimating a time of death.

As these embodiments are in no way limitative, variants of the invention can be considered in particular comprising only a selection of the characteristics described hereinafter, in isolation from the other characteristics described (even if this selection is isolated within a phrase containing these other characteristics), if this selection of characteristics is sufficient to confer a technical advantage or to differentiate the invention with respect to the state of the art. This selection comprises at least one, preferably functional, characteristic without structural details, or with only a part of the structural details if this part alone is sufficient to confer a technical advantage or to differentiate the invention with respect to the state of the prior art.

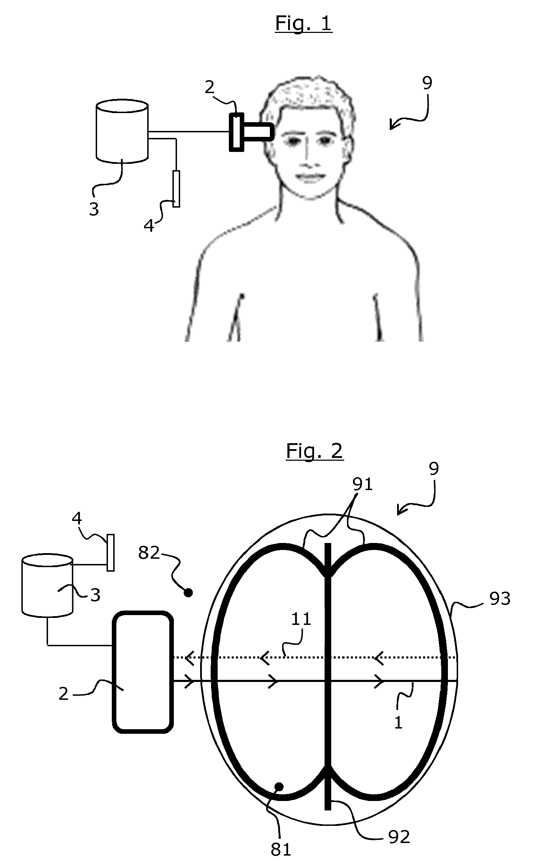

FIG. 1 represents the basic elements 2, 3 and 4 (described hereinafter) of an apparatus for noninvasively determining a time of death of a biological organism 9.

In this example, the biological organism 9 is a human organism.

Turning to FIG. 2, said apparatus comprises an emitter 2 arranged to emit in succession over time ultrasonic waves 1 from outside 82 the biological organism 9.

Said apparatus also comprises a sensor 2 arranged to detect, for each emitted ultrasonic wave 1, from outside 82 the biological organism an echo 11 resulting from a reflection, within 81 the biological organism, of said ultrasonic wave 1.

In FIG. 2, emitted ultrasonic wave 1 and echo 11 are offset with respect to one another for illustrative purposes only.

In the example of FIGS. 1-3, said biological organism 9 comprises a brain 91 and a skull, and said ultrasonic waves 1 are typically emitted in such a way that said ultrasonic waves 1 propagate within 81 said brain 91.

As illustrated in FIG. 1, said ultrasonic waves can be emitted in the direction of an entering area of the skull preferably where the skull thickness is low, in order to reduce wave attenuation.

Said entering area of the skull can be for example the cranial temple, the parietal bone, the temporal bone or the frontal bone of the skull.

The ultrasonic waves 1 propagate through the entering area before reaching the brain 91.

In the embodiment of FIG. 2, said biological organism 9 also comprises a skull bone 93 which is used as a reflective structure or reflection area of the skull. As illustrated in FIG. 1, for each emitted ultrasonic wave 1, said ultrasonic wave 1 is emitted in such a way that its echo 11 results from ultrasonic wave reflection from said skull bone 93, particularly form the part of this bone which is located at the opposite side of the brain 91 regarding the side of the entering area subjected to said ultrasonic waves.

In other words, each emitted ultrasonic wave is emitted in such a way that it propagates through an entering area of the skull before reaching the brain. The echo resulting from the reflection of said ultrasonic wave is a result of a reflection of this ultrasonic wave by a reflection area 93 of the skull such that the brain 91 is comprised between the entering area and the reflection area 93.

Other structures could also be used as reflective structure, like a cerebral hemisphere or any part of the skull, or for instance the falx cerebri 92.

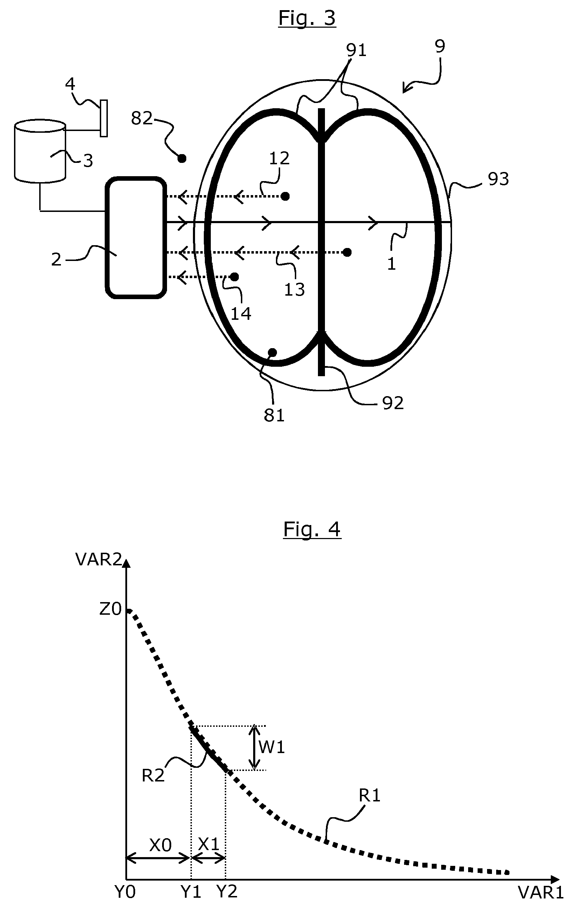

In the alternative embodiment of FIG. 3, said sensor 2 is arranged to detect, for each emitted ultrasonic wave 1, from outside 82 the biological organism an echo 12, 13, 14 resulting from a backscattering, within 81 the biological organism, of said ultrasonic wave 1.

In both cases, reflection and/or backscattering of a given ultrasonic wave 1 within 81 the biological organism 9 generally results in an echo comprising both a fundamental frequency and harmonics of this given ultrasonic wave 1. However, it is preferred to not use harmonics, in particular to optimize the signal-to-noise ratio. In other words, said useful part of the detected echo may preferably not include harmonics of any of the emitted ultrasonic waves 1. Only the fundamental frequency is used in the step of determining the time of death, and no harmonics of any of the emitted ultrasonic waves are used in the step of determining the time of death

In the examples of FIGS. 1-3, said sensor and said emitter comprise a same ultrasonic transducer 2. Said ultrasonic transducer 2 is for instance a single-element pulse echo ultrasonic transducer having an aperture of 1 to 4 cm and a focal length of 6 to 12 cm, for instance produced by "Precision Acoustics Ltd".

Said ultrasonic transducer 2 and/or said emitter is preferably arranged to emit low-frequency ultrasonic waves 1. Each ultrasonic wave preferably has a frequency less than or equal to 1 MHz, preferably less than or equal to 0.7 MHz, preferably from 0.2 to 0.70 MHz, more preferably equal to 0.5 MHz, for a better transmission through the skull. Said ultrasonic transducer 2 and/or said emitter is preferably arranged to emit at least 1000 ultrasonic waves (or pulses) 1 per minute.

A suited transducer 2 has for instance an aperture equal to 3.2 cm and a focal length equal to 7.5 cm, and is for instance arranged to emit waves having a frequency equal to 500 kHz.

The mechanical positioning of said ultrasonic transducer 2 can be achieved using any positioning means ensuring a stable position in relation to the biological organism 9. For instance, the positioning means can comprise a tripod and/or an adhesive patch and/or a helmet.

The apparatus according to the present invention comprises an electronic mean 3 arranged and/or programmed to determine the time of death of the biological organism 9 by comparing:

- a temporal variation of an echo time between the emission of one of the ultrasonic waves and the detection of its echo, or a temporal variation of a quantity which is representative of said temporal variation of said echo time,
- with reference data which are representative of standard temporal variation of this echo time or quantity.

The electronic mean 3 is arranged and/or programmed in order to use only the fundamental frequency for determining the time of death, and for not using harmonics of any of the emitted ultrasonic waves for determining the time of death.

The mean 3 is a technical mean.

Typically, mean 3 can comprise at least one computer, one central processing or computing unit, one analogue electronic circuit (preferably dedicated), one digital electronic circuit (preferably dedicated) and/or one microprocessor (preferably dedicated) and/or software means.

In one embodiment (not shown), said apparatus comprises a database comprising a plurality of series of reference data and said electronic mean 3 may be arranged and/or programmed to select within said database the reference data used for comparing said temporal variation of said echo time or quantity with said reference data.

Here below, there is presented a method that can be used for determining the time of death of the biological organism 9 with an apparatus according to the present invention.

*Example method for the determination of time of death*

In one embodiment (not shown), said electronic mean 3 is arranged and/or programmed to determine said quantity as a function of said echo time temporal variation and of a coefficient $k$.

Each step (in particular each determining or selecting or comparing or calculation step) of the process according to the invention is not performed in a purely abstract or purely intellectual manner but involves use of a technical means.

Typically, each determining or selecting or comparing or calculation step of the process according to the invention can be implemented by at least one computer, one central processing or computing unit, one analogue electronic circuit (preferably dedicated), one digital electronic circuit (preferably dedicated) and/or one microprocessor (preferably dedicated) and/or by software means.

Preferably, said coefficient $k$ may be a function of a constant $\propto$ of thermal expansion of said brain 91 and of a constant $\beta$ which is representative of a temporal variation of wave velocity within 81 said brain 91 according to a temperature of said brain 91, according to the following equation:

$$k = \frac{1}{2} * \frac{1}{\propto - \beta} \qquad \text{(Equation 1)}$$

Such a coefficient is for instance described in the following document: Simon et al., Two-Dimensional Temperature Estimation Using Diagnostic Ultrasound, IEEE UFFC 1992.

As example values, said coefficient $k$ may be from 600°C to 1800°C, preferably from 900°C to 1400°C, preferably 1200°C.

Optionally, said coefficient $k$ of said brain 91 (or of any other brain which could be used as reference) can be estimated as follows (not shown):

- placing the brain within a thermostatically-controlled water bath, for instance such as the temperature measured at a center of the brain with an invasive thermocouple is at 37°C at a first point $d0'$ in time and at 25°C at a second point $d1'$ in time, the temperature decreasing between $d0'$ and $d1'$ for instance according to said Henssge empirical formula,
- subjecting the brain to ultrasonic waves using for instance an ultrasonic transducer such as the one above-mentioned,
- measuring the variation of the echo time $\Delta t'$ over time between $d0'$ and $d1'$,
- calculating said coefficient $k$ according to the following equation:

$$k = t0' * \frac{\Delta T'}{\Delta t'} \qquad \text{(Equation 2)}$$

where $\Delta T'$ is the temperature difference between $d0'$ and $d1'$, and where $t0'$ is the echo time corresponding to the echo detected at $d0'$.

Turning back to the determination of said quantity, this latter may be a variation of an internal temperature $\Delta T$ of said brain 91 between two different points $d0$ and $d1$ in time and is a function of a variation of said echo time $\Delta t$ between $d0$ and $d1$ and of said coefficient $k$ according to the following equation:

$$\Delta T = \gamma * k * \frac{\Delta t}{t0} \qquad \text{(Equation 3)}$$

where y is a corrective factor and $t0$ is the echo time corresponding to the echo detected at $d0$ (reflection case).

Preferably, said corrective factor is from 1.00 to 1.20, preferably from 1.05 to 1.15.

Alternatively, said variation of internal temperature $\Delta T$ may be calculated using a number of local variations $\partial \Delta t$ of echo time between $d0$ and $d1$ at different locations within said brain 91, each local variation depending upon a local coefficient $k$ (backscattering case):

$$\Delta T = k * \frac{\partial \Delta t}{t0} \qquad \text{(Equation 3bis)}$$

where $t0$ is the echo time corresponding to the echo detected at $d0$.

In this case, said local coefficient $k$ can be estimated using the above-mentioned method but where the temperature is not measured at a center of the brain but, for each local coefficient $k$, at a region within the brain associated with this local coefficient $k$. In an approximation, the local coefficient $k$ is a constant for all the different regions within the brain, typically from 600°C to 1800°C, preferably from 900°C to 1400°C, preferably 1200°C.

In the embodiment of FIGS. 1-3, said apparatus comprises a thermometer 4 arranged to measure an external temperature $T\_ext$ outside 82 the biological organism 9 and said electronic mean 3 is arranged and/or programmed to determine said reference data according to said external temperature $T\_ext$.

In this embodiment, said reference data may preferably comprise temperature data $T$ which are a function of time $t$ in hours and of $T\_ext$ in degree Celsius.

Preferably, said temperature data T may be calculated according to the following equation (Henssge empirical formula):

$$T = T\_ext + (37.2 - T\_ext) * (1.135 * e^{-0.127*t} - 0.135 * e^{-1.0677*t})$$

$$\text{(Equation 4)}$$

In order to obtain a reliable time of death estimation, the duration between the first and the last emitted ultrasonic waves 1 may be greater than or equal to 10 min, preferably greater than or equal to 20 min.

FIG. 4 shows a graph plotting typical reference data R1 which are representative of a standard variation over time of an internal temperature of a typical human brain ("reference brain"). In this graph, a VAR1-axis represents the time from a reference time of death Y0, and a VAR2-axis represents a typical normalized temperature of said reference brain. It is shown in FIG. 4 that said typical reference data R1 consists in a biexponential decrease (Henssge type, see Equation 4 for instance) of the reference brain temperature over time from an initial temperature Z0 at said reference time of death Y0.

As illustrated by in FIG. 4, the graph also plots calculated data R2 corresponding to a global variation of internal temperature W1 of a brain of a human organism ("examined brain") subjected to the process of the present invention, W1 being in this case for example a number of successive variations of internal temperature $\Delta T$ successively calculated during the process according to equation 3 or 3bis.

The calculated data R2 comprises approximatively one point for each emitted ultrasonic wave and thus for each detected echo.

In this illustrative example, the stage of said process in which this temporal variation R2 of internal temperature is compared with reference data R1 consists in a visual comparison between said reference data R1 and said calculated data R2. In this example, the calculated data R2 is plotted in the graph so as to best fit with the reference data R1. Of course, particularly in the case where reference and/or calculated data are digitally implemented, the comparison step could be made by any comparison method via any processing algorithm. For instance, the fitting process could be made using any optimization approach such as the least squares method.

In the example of FIG. 4, the first ultrasonic wave 1 that was emitted during the process corresponds with a first time Y1 and the last emitted ultrasonic wave 1 corresponds with a second time Y2. The duration X1 between the first and the last emitted ultrasonic waves 1 thus represents an interval during which a succession of ultrasonic waves 1 was emitted according to the process of the present invention.

Once the calculated data R2 are thus matched with the reference data R1, the determination of time of death of said human organism can be derived from the difference between said first time Y1 at which was emitted said first ultrasonic wave 1 and said reference time of death Y0 (duration X0 in FIG. 4).

Of course, the invention is not limited to the examples which have just been described and numerous adjustments can be made to these examples without exceeding the scope of the invention.

Of course, the various characteristics, forms, variants and embodiments of the invention can be combined together in various combinations insofar as they are not incompatible or mutually exclusive. In particular, all the previously described variants and embodiments can be combined together.

**Claims**

1. Process for noninvasively determining a time of death of a biological organism (9) comprising:

   - emitting in succession over time ultrasonic waves (1) from outside (82) the biological organism (9) in such a way that said ultrasonic waves (1) propagate within (81) the biological organism (9);
   - for each emitted ultrasonic wave (1), detecting from outside (82) the biological organism (9) an echo (11, 12, 13, 14) resulting from a reflection and/or a backscattering within (81) the biological organism (9) of said ultrasonic wave (1);
   - determining the time of death of the biological organism (9) by comparing:

      ○ a temporal variation (R2) of an echo time between the emission of one (1) of the ultrasonic waves and the detection of its echo (11, 12, 13, 14), or a temporal variation of a quantity which is representative of said temporal variation of said echo time,
      ○ with reference data (R1) which are representative of standard temporal variation of this echo time or quantity.

2. Process according to claim 1 wherein ultrasonic wave emission and echo detection are carried out by a same ultrasonic transducer (2).

3. Process according to claim 1 or 2 wherein said ultrasonic waves (1) are low-frequency waves, preferably with a frequency less than or equal to 1 MHz, preferably less than or equal to 0.7 MHz, preferably from 0.2 to 0.7 MHz.

4. Process according to anyone of the preceding claims wherein said biological organism (9) comprises a brain (91) and said ultrasonic waves (1) are emitted in such a way that said ultrasonic waves (1) propagate within (81) said brain (91).

5. Process according to claim 4 wherein said biological organism (9) comprises a skull and said ultrasonic waves (1) are emitted in the direction of an entering area of the skull, so that said ultrasonic waves (1) propagate through the entering area of the skull before reaching the brain (91) inside the skull.

6. Process according to claim 4 or 5 wherein said biological organism (9) comprises a skull and wherein:

   - each emitted ultrasonic wave (1) is emitted in such a way that the echo resulting from the reflection of said ultrasonic wave is a result of a reflection of this ultrasonic wave by a reflection area (93) of the skull, so that each ultrasonic wave (1) propagates through the brain before reaching the reflection area (93), or
   - each emitted ultrasonic wave (1) is emitted in such a way that the echo (12, 13, 14) of said ultrasonic wave (1) is received as a result of a backscattering phenomenon in an area of interest of the brain (91), so that each ultrasonic wave (1) propagates through the brain (91) before reaching the area of interest.

7. Process according to anyone of the preceding claims further comprising determining said quantity as a function of said echo time temporal variation and of a coefficient $k$.

8. Process according to claim 7 wherein said quantity is a variation of an internal temperature AT calculated using a number of local variations $\partial \Delta t$ of echo time between $d0$ and $d1$ at different locations within said biological organism, each local variation depending upon a local coefficient $k$, according to the following equation:

$$\Delta T = k * \frac{\partial \Delta t}{t0}$$

where $t0$ is the echo time corresponding to the echo detected at $d0$.

9. Process according to claim 7 or 8 considered to be dependent on claim 4, 5 or 6 wherein said coefficient $k$ is a function of a constant $\propto$ of thermal expansion of said brain (91) and of a constant $\beta$ which is representative of a temporal variation of wave velocity within said brain (91) according to a temperature of said brain (91), according to the following equation:

$$k = \frac{1}{2} * \frac{1}{\propto - \beta}$$

10. Process according to claim 9 wherein said coefficient $k$ is from 600°C to 1800°C, preferably from 900°C to 1400°C, preferably 1200°C.

11. Process according to anyone of the preceding claims further comprising measuring an external temperature $T\_ext$ outside (82) the biological organism (9), and wherein said reference data depend upon said external temperature $T\_ext$.

12. Process according to claim 11 wherein said reference data comprise temperature data $T$ which are a function of time $t$ in hours and of $T\_ext$ in degree Celsius.

13. Process according to claim 12 wherein said temperature data T are calculated according to the following equation:

$$T = T\_ext + (37.2 - T\_ext) * (1.135 * e^{-0.127*t} - 0.135 * e^{-1.0677*t}).$$

14. Process according to anyone of the preceding claims further comprising selecting the reference data used for the comparing step within a database comprising a plurality of series of reference data.

15. Process according to anyone of the preceding claims wherein the duration between the first and the last emitted ultrasonic waves (1) is greater than or equal to 10 min, preferably greater than or equal to 20 min.

16. Process according to anyone of the preceding claims wherein said echo (11, 12, 13, 14) includes a fundamental frequency of a corresponding ultrasonic wave (1).

17. Process according to anyone of the preceding claims wherein only the fundamental frequency is used in the step of determining the time of death, and no harmonics of any of the emitted ultrasonic waves are used in the step of determining the time of death.

18. Apparatus for noninvasively determining a time of death of a biological organism (9) comprising:

    - an emitter (2) arranged to emit in succession over time ultrasonic waves (1) from outside (82) the biological organism (9);
    - a sensor (2) arranged to detect, for each emitted ultrasonic wave (1), from outside (82) the biological organism (9) an echo (11, 12, 13, 14) resulting from a reflection and/or a backscattering within (81) the biological organism (9) of said ultrasonic wave (1);
    - an electronic mean (3) arranged to determine the time of death of the biological organism (9) by comparing:

        ◦ a temporal variation (R2) of an echo time between the emission of one (1) of the ultrasonic waves and the detection of its echo (11, 12, 13, 14), or a temporal variation of a quantity which is representative of said temporal variation of said echo time,
        ◦ with reference data (R1) which are representative of standard temporal variation of this echo time or quantity.

Fig. 1

Fig. 2

Fig. 3

Fig. 4

Europäisches
Patentamt

European
Patent Office

Office européen
des brevets

**EUROPEAN SEARCH REPORT**

Application Number

EP 16 30 5373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEBB ET AL: "A Method for Time of Death Determination Using Ultrasound-A Preliminary Report", JOURNAL - FORENSIC SCIENCE SOCIETY, FORENSIC SCIENCE SOCIETY, HARROGATE, GB, vol. 26, no. 6, 1 November 1986 (1986-11-01), pages 393-399, XP022567282, ISSN: 0015-7368 | 1-7, 11-18 | INV. G01N29/024 G01N29/07 G01N29/44 |
| Y | * the whole document * | 8-10 | |
| Y,D | SIMON C ET AL: "Two-dimensional temperature estimation using diagnostic ultrasound", IEEE TRANSACTIONS ON ULTRASONICS, FERROELECTRICS AND FREQUENCY CONTROL, IEEE, US, vol. 45, no. 4, 1 July 1998 (1998-07-01), pages 1088-1099, XP011437784, ISSN: 0885-3010, DOI: 10.1109/58.710592 * the whole document * | 8-10 | |
| A | FAN Z ET AL: "Study on the relationship between the corneal thickness and the time since death with non-invasive measurement technique", CHINESE JOURNAL OF FORENSIC MEDICINE, CN, vol. 25, no. 2, 20 April 2010 (2010-04-20), pages 82-84, XP008180909, ISSN: 1001-5728 * abstract * | 1,18 | TECHNICAL FIELDS SEARCHED (IPC) G01N |

-/--

The present search report has been drawn up for all claims

| Place of search | Date of completion of the search | Examiner |
|---|---|---|
| Munich | 4 August 2016 | Rouault, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

**EUROPEAN SEARCH REPORT**

Application Number

EP 16 30 5373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LUE GUO-LI ET AL: "[Estimation of postmortem interval by detecting thickness of cornea using ultrasonic method]", FA YI XUE ZA ZHI: JOURNAL OF FORENSIC MEDICINE, CN, vol. 28, no. 2, 1 April 2012 (2012-04-01), pages 89-91, XP008180908, ISSN: 1004-5619 * abstract * | 1,18 | |

TECHNICAL FIELDS
SEARCHED      (IPC)

The present search report has been drawn up for all claims

| Place of search | Date of completion of the search | Examiner |
|---|---|---|
| Munich | 4 August 2016 | Rouault, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150127293 A1


**Non-patent literature cited in the description**

- **SIMON et al.** Two-Dimensional Temperature Estimation Using Diagnostic Ultrasound. *IEEE UFFC,* 1992